# EUROPEAN PATENT SPECIFICATION

(11) **EP 3 268 397 B1**
(45) Date of publication and mention of the grant of the patent: **17.04.2019**
(21) Application number: 16709006.7
(22) Date of filing: 07.03.2016
(51) Int. Cl.: C08F 4/651, C08F 10/06

(54) **CATALYST COMPONENTS FOR THE POLYMERIZATION OF OLEFINS**
KATALYSATORKOMPONENTEN ZUR OLEFINPOLYMERISIERUNG
COMPOSANTS DE CATALYSEUR POUR LA POLYMÉRISATION D'OLÉFINES

(30) Priority: 10.03.2015 EP 15158467
(43) Date of publication of application: 17.01.2018
(73) Proprietor: Basell Poliolefine Italia S.r.l., 20121 Milano (IT)
(72) Inventor: MIGNOGNA, Alessandro, 44122 Ferrara (IT); MORINI, Giampiero, 44122 Ferrara (IT)
(74) Representative: Giberti, Stefano
(86) International application number: PCT/EP2016/054773
(87) International publication number: WO 2016/142335

(56) References cited:
- EP-A1- 2 759 552
- EP-A1- 2 803 679
- DE-A1- 19 927 979
- US-A1- 2008 194 782

## Description

### FIELD OF THE INVENTION

The present disclosure relates to catalyst components for the polymerization of olefins, in particular propylene, comprising a Mg dihalide based support on which are supported Ti atoms and an electron donor compound containing an ester and a carbonate function. The present disclosure further relates to the catalysts obtained from said components and to their use in processes for the polymerization of olefins in particular propylene.

### BACKGROUND OF THE INVENTION

Catalyst components for the stereospecific polymerization of olefins have been disclosed in the art. Concerning the polymerization of propylene, Ziegler-Natta catalysts are used which, in general terms, comprise a solid catalyst component, constituted by a magnesium dihalide on which are supported a titanium compound and an internal electron donor compound, used in combination with an Al-alkyl compound. However, when a higher cristallinity of the polymer is desired, also an external donor (for example an alkoxysilane) is needed in order to obtain higher isotacticity. Esters of phthalic acid, particularly diisobutylphthalate, are used as internal donors in catalyst preparations. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised concerns due to the medical issues associated with their use and some compounds within this class have been classified as source of heavy health problems.

Consequently, research activities have been devoted to discover alternative classes of internal donors for use in the preparation of catalyst components for propylene polymerization. One of the interesting classes is that described in US7,388,061 disclosing esters belonging to the formula R₁-CO-O-CR₃R₄-A-CR₅R₆-O-CO-R₂ in which R₁ and R₂ groups, which may be identical or different, can be substituted or unsubstituted hydrocarbyl having 1 to 20 carbon atoms, R₃-R₆ groups, which may be identical or different, can be selected from the group consisting of hydrogen, halogen or substituted or unsubstituted hydrocarbyl having 1 to 20 carbon atoms, R₁-R₆ groups optionally contain one or more hetero-atoms replacing carbon, hydrogen atom or the both, said hetero-atom is selected from the group consisting of nitrogen, oxygen, sulfur, silicon, phosphorus and halogen atom, two or more of R₃-R₆ groups can be linked to form saturated or unsaturated monocyclic or polycyclic ring; A is a single bond or bivalent linking group with chain length between two free radicals being 1-10 atoms, wherein said bivalent linking group is selected from the group consisting of aliphatic, alicyclic and aromatic bivalent radicals, and can carry C₁-C₂₀ linear or branched substituents; one or more of carbon atoms and/or hydrogen atoms on above-mentioned bivalent linking group and substituents can be replaced by a hetero-atom selected from the group consisting of nitrogen, oxygen, sulfur, silicon, phosphorus, and halogen atom, and two or more said substituents on the linking group as well as above-mentioned R₃-R₆ groups can be linked to form saturated or unsaturated monocyclic or polycyclic ring.

PCT application WO2010078494 discloses 1,2-phenylene aromatic diesters as internal donors useful in the preparation of catalysts for propylene polymerization.

In general, as described in PCT application WO2011/068775 and PCT application WO2011/068770, replacing the aromatic acid derivatives with the chloroformate derivatives carries a pronounced worsening of the properties particularly in terms of stereospecificity.

US 2008/0194782 describes certain structures corresponding to carbonates of α-hydroxy esters. The structures however, are not employed in the preparation of the catalysts for the polymerization of olefins.

### SUMMARY OF THE INVENTION

Surprisingly, the applicant has found that a non-diol derivative class of donors containing both a carbonate and an ester function, generates catalysts showing a good balance of activity and stereospecificity.

Accordingly, the present disclosure provides a catalyst component for the polymerization of olefins comprising Mg, Ti, halogen and an electron donor of formula (I) or (II) 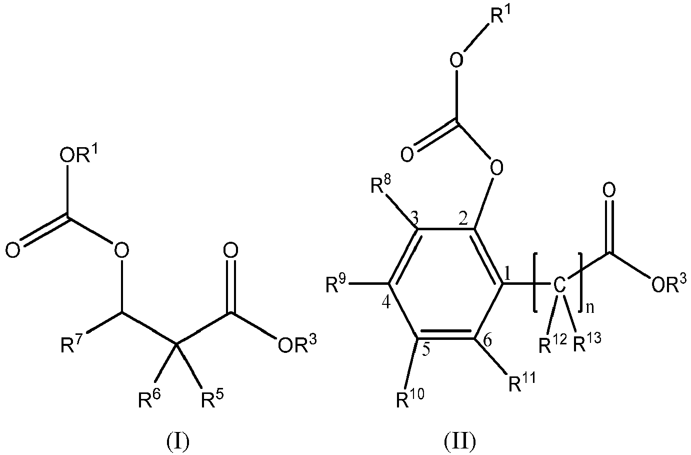 Where:
- R¹ and R³ are selected from C₁-C₁₅ hydrocarbon groups, optionally containing a heteroatom selected from halogen, P, S, N and O;
- R⁵-R⁷ groups are independently hydrogen or a C₁-C₂₀ hydrocarbon radicals, optionally substituted with heteroatoms selected from halogen, P, S, N, O and Si, which can be fused together to form one or more cycles;
- R⁸ to R¹¹, independently, are selected from hydrogen, halogens or C₁-C₁₅ hydrocarbon groups optionally substituted with heteroatoms selected from halogen, P, S, N, O and Si;
- R¹² to R¹³ groups, equal to or different from each other, are hydrogen or R¹ groups which can be fused together to form one or more cycles and
n is an integer from 0 to 2.

### DETAILED DESCRIPTION OF THE INVENTION

Preferred structures of formula (I) are those in which at least one of the R⁵-R⁷ groups is a C₁-C₂₀ hydrocarbon radicals, preferably a C₁-C₁₀ alkyl group. In a particular embodiment, R⁵ and R⁷ are C₁-C₁₀ alkyl groups.

Preferred structures of formula (II) are those in which at least one and preferably at least two of the R⁸ to R¹¹ groups are different from hydrogen. In particular, preferred structures are those in which the aromatic ring is substituted in position 3 and/or 5. In all these cases, R⁸ to R¹¹ groups are preferably selected from C₁-C₅ alkyl groups. Particularly preferred is the substitution in position 3 and/or 5 with an alkyl group. In a particularly preferred embodiment the alkyl group in position 5 is a secondary or tertiary alkyl group especially tert-butyl.

Preferred structures are those in which n is 1, preferably combined with at least one of R¹² and R¹³ being hydrogen especially combined with the aromatic ring substituted as described.

In the structures of formulae (I)-(II) the R¹ and R³ groups are independently selected from C₁-C₁₅ alkyl groups, C₆-C₁₄ aryl groups, C₃-C₁₅ cycloalkyl groups, and C₇-C₁₅ arylalkyl or alkylaryl groups. More preferably, the R¹ and R³ groups are independently selected from C₁-C₁₀ alkyl groups and even more preferably from C₁-C₅ alkyl groups in particular ethyl.

Preferably, the final amount of electron donor compound in the solid catalyst component ranges from 1 to 25% by weight preferably in the range from 3 to 20% by weight.

Examples of structures of formulas (I)-(II) are the following:
ethyl 2-((ethoxycarbonyl)oxy)-1-naphthoate, ethyl 2-((ethoxycarbonyl)oxy)-3,5-diisopropylbenzoate, ethyl 2-((ethoxycarbonyl)oxy)-3,5-dimethylbenzoate, ethyl 2-((ethoxycarbonyl)oxy)-3-methylbenzoate, ethyl 2-((ethoxycarbonyl)oxy)benzoate, ethyl 2-((phenoxycarbonyl)oxy)benzoate, ethyl 3,5-di-tert-butyl-2-((ethoxycarbonyl)oxy)benzoate, ethyl 3-((ethoxycarbonyl)oxy)-2-naphthoate, ethyl 5-(tert-butyl)-2-((ethoxycarbonyl)oxy)-3-methylbenzoate, ethyl 5-(tert-butyl)-2-((ethoxycarbonyl)oxy)benzoate, ethyl 5-(tert-butyl)-3-methyl-2-((phenoxycarbonyl)oxy)benzoate, ethyl 5-chloro-2-((ethoxycarbonyl)oxy)benzoate, butyl 2-(2-((ethoxycarbonyl)oxy)phenyl)acetate, butyl 2-(5-(tert-butyl)-2-((ethoxycarbonyl)oxy)-3-methylphenyl)acetate, ethyl 2-(2-((butoxycarbonyl)oxy)phenyl)acetate, ethyl 2-(2-((ethoxycarbonyl)oxy)-3,5-dimethylphenyl)acetate, ethyl 2-(2-((ethoxycarbonyl)oxy)-3-methylphenyl)acetate, ethyl 2-(2-((ethoxycarbonyl)oxy)-5-methylphenyl)acetate, ethyl 2-(2-((ethoxycarbonyl)oxy)naphthalen-1-yl)acetate, ethyl 2-(2-((ethoxycarbonyl)oxy)phenyl)-2-methylpropanoate, ethyl 2-(2-((ethoxycarbonyl)oxy)phenyl)-3,3-dimethylbutanoate, ethyl 2-(2-((ethoxycarbonyl)oxy)phenyl)-3-methylbutanoate, ethyl 2-(2-((ethoxycarbonyl)oxy)phenyl)-3-phenylpropanoate, ethyl 2-(2-((ethoxycarbonyl)oxy)phenyl)-4-methylpentanoate, ethyl 2-(2-((ethoxycarbonyl)oxy)phenyl)acetate, ethyl 2-(2-((ethoxycarbonyl)oxy)phenyl)propanoate, ethyl 2-(2-((isobutoxycarbonyl)oxy)phenyl)acetate, ethyl 2-(2-((methoxycarbonyl)oxy)phenyl)acetate, ethyl 2-(2-((phenoxycarbonyl)oxy)phenyl)acetate, ethyl 2-(2-((propoxycarbonyl)oxy)phenyl)acetate, ethyl 2-(3,5-di-tert-butyl-2-((ethoxycarbonyl)oxy)phenyl)acetate, ethyl 2-(3-((ethoxycarbonyl)oxy)naphthalen-2-yl)acetate, ethyl 2-(5-(tert-butyl)-2-((ethoxycarbonyl)oxy)-3-methylphenyl)-2-methylpropanoate, ethyl 2-(5-(tert-butyl)-2-((ethoxycarbonyl)oxy)-3-methylphenyl)-3-methylbutanoate, ethyl 2-(5-(tert-butyl)-2-((ethoxycarbonyl)oxy)-3-methylphenyl)acetate, ethyl 2-(5-(tert-butyl)-2-((ethoxycarbonyl)oxy)-3-methylphenyl)propanoate, ethyl 2-(5-(tert-butyl)-2-((ethoxycarbonyl)oxy)phenyl)acetate, ethyl 2-(5-(tert-butyl)-3-methyl-2-((phenoxycarbonyl)oxy)phenyl)acetate, ethyl 2-(5-chloro-2-((ethoxycarbonyl)oxy)phenyl)acetate, ethyl 2-(5-methyl-2-((phenoxycarbonyl)oxy)phenyl)acetate, isobutyl 2-(2-((ethoxycarbonyl)oxy)phenyl)acetate, isobutyl 2-(2-((isobutoxycarbonyl)oxy)phenyl)acetate, methyl 2-(2-((ethoxycarbonyl)oxy)phenyl)acetate, methyl 2-(2-((methoxycarbonyl)oxy)phenyl)acetate, propyl 2-(2-((ethoxycarbonyl)oxy)phenyl)acetate, ethyl 2'-((ethoxycarbonyl)oxy)-1,2,3,6-tetrahydro-[1,1'-biphenyl]-2-carboxylate, ethyl 2-(2-((ethoxycarbonyl)oxy)phenyl)-3,6-dimethylcyclohexanecarboxylate, ethyl 2-(2-((ethoxycarbonyl)oxy)phenyl)cyclohexanecarboxylate, ethyl 3-(2-((ethoxycarbonyl)oxy)phenyl)-2-methylbutanoate, ethyl 3-(2-((ethoxycarbonyl)oxy)phenyl)-2-methylpropanoate, ethyl 3-(2-((ethoxycarbonyl)oxy)phenyl)butanoate, ethyl 3-(2-((ethoxycarbonyl)oxy)phenyl)propanoate, ethyl 2,2-dibutyl-3-((ethoxycarbonyl)oxy)-5-methylhexanoate, ethyl 2,2-dibutyl-3-((ethoxycarbonyl)oxy)heptanoate, ethyl 2,2-dibutyl-3-((ethoxycarbonyl)oxy)hexanoate, ethyl 2-(((ethoxycarbonyl)oxy)methyl)-2,4-dimethylpentanoate, ethyl 2-(((ethoxycarbonyl)oxy)methyl)-2-ethyl-4-methylpentanoate, ethyl 2-(((ethoxycarbonyl)oxy)methyl)-2-ethylbutanoate, ethyl 2-(((ethoxycarbonyl)oxy)methyl)-2-ethylhexanoate, ethyl 2-(((ethoxycarbonyl)oxy)methyl)-2-ethylpentanoate, ethyl 2-(((ethoxycarbonyl)oxy)methyl)-2-isobutyl-4-methylpentanoate, ethyl 2-(((ethoxycarbonyl)oxy)methyl)-2-isobutylhexanoate, ethyl 2-(((ethoxycarbonyl)oxy)methyl)-2-methylbutanoate, ethyl 2-(((ethoxycarbonyl)oxy)methyl)-2-methylhexanoate, ethyl 2-(((ethoxycarbonyl)oxy)methyl)-2-methylpentanoate, ethyl 2-(((ethoxycarbonyl)oxy)methyl)-2-propylhexanoate, ethyl 2-(((ethoxycarbonyl)oxy)methyl)-2-propylpentanoate, ethyl 2-(((ethoxycarbonyl)oxy)methyl)-4-methyl-2-propylpentanoate, ethyl 2-(((ethoxycarbonyl)oxy)methyl)-4-methylpentanoate, ethyl 2-(((ethoxycarbonyl)oxy)methyl)butanoate, ethyl 2-(((ethoxycarbonyl)oxy)methyl)hexanoate, ethyl 2-(((ethoxycarbonyl)oxy)methyl)pentanoate, ethyl 2-(1-((ethoxycarbonyl)oxy)ethyl)-2,4-dimethylpentanoate, ethyl 2-(1-((ethoxycarbonyl)oxy)ethyl)-2-ethyl-4-methylpentanoate, ethyl 2-(1-((ethoxycarbonyl)oxy)ethyl)-2-ethylhexanoate, ethyl 2-(1-((ethoxycarbonyl)oxy)ethyl)-2-ethylpentanoate, ethyl 2-(1-((ethoxycarbonyl)oxy)ethyl)-2-isobutyl-4-methylpentanoate, ethyl 2-(1-((ethoxycarbonyl)oxy)ethyl)-2-isobutylhexanoate, ethyl 2-(1-((ethoxycarbonyl)oxy)ethyl)-2-methylhexanoate, ethyl 2-(1-((ethoxycarbonyl)oxy)ethyl)-2-methylpentanoate, ethyl 2-(1-((ethoxycarbonyl)oxy)ethyl)-2-propylhexanoate, ethyl 2-(1-((ethoxycarbonyl)oxy)ethyl)-2-propylpentanoate, ethyl 2-(1-((ethoxycarbonyl)oxy)ethyl)-4-methyl-2-propylpentanoate, ethyl 2-(1-((ethoxycarbonyl)oxy)ethyl)-4-methylpentanoate, ethyl 2-(1-((ethoxycarbonyl)oxy)ethyl)hexanoate, ethyl 2-(1-((ethoxycarbonyl)oxy)ethyl)pentanoate, ethyl 2-(1-((ethoxycarbonyl)oxy)propyl)-2-ethylhexanoate, ethyl 2-(1-((ethoxycarbonyl)oxy)propyl)-2-isobutylhexanoate, ethyl 2-(1-((ethoxycarbonyl)oxy)propyl)-2-methylhexanoate, ethyl 2-(1-((ethoxycarbonyl)oxy)propyl)-2-propylhexanoate, ethyl 2-(1-((ethoxycarbonyl)oxy)propyl)hexanoate, ethyl 2-butyl-2-(((ethoxycarbonyl)oxy)methyl)hexanoate, ethyl 2-butyl-2-(1-((ethoxycarbonyl)oxy)ethyl)hexanoate, ethyl 2-butyl-2-(1-((ethoxycarbonyl)oxy)propyl)hexanoate, ethyl 2-butyl-3-((ethoxycarbonyl)oxy)-2,5-dimethylhexanoate, ethyl 2-butyl-3-((ethoxycarbonyl)oxy)-2-ethyl-5-methylhexanoate, ethyl 2-butyl-3-((ethoxycarbonyl)oxy)-2-ethylheptanoate, ethyl 2-butyl-3-((ethoxycarbonyl)oxy)-2-ethylhexanoate, ethyl 2-butyl-3-((ethoxycarbonyl)oxy)-2-isobutyl-5-methylhexanoate, ethyl 2-butyl-3-((ethoxycarbonyl)oxy)-2-isobutylheptanoate, ethyl 2-butyl-3-((ethoxycarbonyl)oxy)-2-isobutylhexanoate, ethyl 2-butyl-3-((ethoxycarbonyl)oxy)-2-methylheptanoate, ethyl 2-butyl-3-((ethoxycarbonyl)oxy)-2-methylhexanoate, ethyl 2-butyl-3-((ethoxycarbonyl)oxy)-2-propylheptanoate, ethyl 2-butyl-3-((ethoxycarbonyl)oxy)-2-propylhexanoate, ethyl 2-butyl-3-((ethoxycarbonyl)oxy)-5-methyl-2-propylhexanoate, ethyl 2-butyl-3-((ethoxycarbonyl)oxy)-5-methylhexanoate, ethyl 2-butyl-3-((ethoxycarbonyl)oxy)heptanoate, ethyl 2-butyl-3-((ethoxycarbonyl)oxy)hexanoate, ethyl 3-((ethoxycarbonyl)oxy)-2,2,5-trimethylhexanoate, ethyl 3-((ethoxycarbonyl)oxy)-2,2-diethyl-5-methylhexanoate, ethyl 3-((ethoxycarbonyl)oxy)-2,2-diethylbutanoate, ethyl 3-((ethoxycarbonyl)oxy)-2,2-diethylheptanoate, ethyl 3-((ethoxycarbonyl)oxy)-2,2-diethylhexanoate, ethyl 3-((ethoxycarbonyl)oxy)-2,2-diethylpentanoate, ethyl 3-((ethoxycarbonyl)oxy)-2,2-diisobutyl-5-methylhexanoate, ethyl 3-((ethoxycarbonyl)oxy)-2,2-diisobutylheptanoate, ethyl 3-((ethoxycarbonyl)oxy)-2,2-diisobutylhexanoate, ethyl 3-((ethoxycarbonyl)oxy)-2,2-diisobutylpentanoate, ethyl 3-((ethoxycarbonyl)oxy)-2,2-dimethylbutanoate, ethyl 3-((ethoxycarbonyl)oxy)-2,2-dimethylheptanoate, ethyl 3-((ethoxycarbonyl)oxy)-2,2-dimethylhexanoate, ethyl 3-((ethoxycarbonyl)oxy)-2,2-dimethylpentanoate, ethyl 3-((ethoxycarbonyl)oxy)-2,2-dimethylpropanoate, ethyl 3-((ethoxycarbonyl)oxy)-2,2-dipropylheptanoate, ethyl 3-((ethoxycarbonyl)oxy)-2,2-dipropylhexanoate, ethyl 3-((ethoxycarbonyl)oxy)-2,2-dipropylpentanoate, ethyl 3-((ethoxycarbonyl)oxy)-2,5-dimethyl-2-propylhexanoate, ethyl 3-((ethoxycarbonyl)oxy)-2,5-dimethylhexanoate, ethyl 3-((ethoxycarbonyl)oxy)-2-ethyl-2,5-dimethylhexanoate, ethyl 3-((ethoxycarbonyl)oxy)-2-ethyl-2-isobutyl-5-methylhexanoate, ethyl 3-((ethoxycarbonyl)oxy)-2-ethyl-2-isobutylheptanoate, ethyl 3-((ethoxycarbonyl)oxy)-2-ethyl-2-isobutylhexanoate, ethyl 3-((ethoxycarbonyl)oxy)-2-ethyl-2-isobutylpentanoate, ethyl 3-((ethoxycarbonyl)oxy)-2-ethyl-2-methylbutanoate, ethyl 3-((ethoxycarbonyl)oxy)-2-ethyl-2-methylheptanoate, ethyl 3-((ethoxycarbonyl)oxy)-2-ethyl-2-methylhexanoate, ethyl 3-((ethoxycarbonyl)oxy)-2-ethyl-2-methylpentanoate, ethyl 3-((ethoxycarbonyl)oxy)-2-ethyl-2-propylheptanoate, ethyl 3-((ethoxycarbonyl)oxy)-2-ethyl-2-propylhexanoate, ethyl 3-((ethoxycarbonyl)oxy)-2-ethyl-2-propylpentanoate, ethyl 3-((ethoxycarbonyl)oxy)-2-ethyl-5-methyl-2-propylhexanoate, ethyl 3-((ethoxycarbonyl)oxy)-2-ethyl-5-methylhexanoate, ethyl 3-((ethoxycarbonyl)oxy)-2-ethylbutanoate, ethyl 3-((ethoxycarbonyl)oxy)-2-ethylheptanoate, ethyl 3-((ethoxycarbonyl)oxy)-2-ethylhexanoate, ethyl 3-((ethoxycarbonyl)oxy)-2-ethylpentanoate, ethyl 3-((ethoxycarbonyl)oxy)-2-isobutyl-2,5-dimethylhexanoate, ethyl 3-((ethoxycarbonyl)oxy)-2-isobutyl-2-methylheptanoate, ethyl 3-((ethoxycarbonyl)oxy)-2-isobutyl-2-methylhexanoate, ethyl 3-((ethoxycarbonyl)oxy)-2-isobutyl-2-methylpentanoate, ethyl 3-((ethoxycarbonyl)oxy)-2-isobutyl-2-propylheptanoate, ethyl 3-((ethoxycarbonyl)oxy)-2-isobutyl-2-propylhexanoate, ethyl 3-((ethoxycarbonyl)oxy)-2-isobutyl-2-propylpentanoate, ethyl 3-((ethoxycarbonyl)oxy)-2-isobutyl-5-methyl-2-propylhexanoate, ethyl 3-((ethoxycarbonyl)oxy)-2-isobutyl-5-methylhexanoate, ethyl 3-((ethoxycarbonyl)oxy)-2-isobutylheptanoate, ethyl 3-((ethoxycarbonyl)oxy)-2-isobutylhexanoate, ethyl 3-((ethoxycarbonyl)oxy)-2-isobutylpentanoate, ethyl 3-((ethoxycarbonyl)oxy)-2-methyl-2-propylheptanoate, ethyl 3-((ethoxycarbonyl)oxy)-2-methyl-2-propylhexanoate, ethyl 3-((ethoxycarbonyl)oxy)-2-methyl-2-propylpentanoate, ethyl 3-((ethoxycarbonyl)oxy)-2-methylbutanoate, ethyl 3-((ethoxycarbonyl)oxy)-2-methylheptanoate, ethyl 3-((ethoxycarbonyl)oxy)-2-methylhexanoate, ethyl 3-((ethoxycarbonyl)oxy)-2-methylpentanoate, ethyl 3-((ethoxycarbonyl)oxy)-2-methylpropanoate, ethyl 3-((ethoxycarbonyl)oxy)-2-propylheptanoate, ethyl 3-((ethoxycarbonyl)oxy)-2-propylhexanoate, ethyl 3-((ethoxycarbonyl)oxy)-2-propylpentanoate, ethyl 3-((ethoxycarbonyl)oxy)-5-methyl-2,2-dipropylhexanoate, ethyl 3-((ethoxycarbonyl)oxy)-5-methyl-2-propylhexanoate, ethyl 3-((ethoxycarbonyl)oxy)-5-methylhexanoate, ethyl 3-((ethoxycarbonyl)oxy)butanoate, ethyl 3-((ethoxycarbonyl)oxy)heptanoate, ethyl 3-((ethoxycarbonyl)oxy)hexanoate, ethyl 3-((ethoxycarbonyl)oxy)pentanoate, ethyl 3-((ethoxycarbonyl)oxy)propanoate, , , , , , , ethyl 4-((ethoxycarbonyl)oxy)-2,2-dimethylpentanoate, ethyl 4-((ethoxycarbonyl)oxy)-2,3-dimethylpentanoate, ethyl 4-((ethoxycarbonyl)oxy)-2-methylbutanoate, ethyl 4-((ethoxycarbonyl)oxy)-2-methylpentanoate, ethyl 4-((ethoxycarbonyl)oxy)butanoate, ethyl 4-((ethoxycarbonyl)oxy)pentanoate, ethyl 8-((ethoxycarbonyl)oxy)-1-naphthoate.

The compounds falling in formula (I) can be prepared by reacting a hydroester HO-A-COOR³ with an alkyl chloroformate R¹O-CO-C1 in the presence of base such as a tertiary amine. In solid catalyst component of the disclosure the amount of Ti atoms in the solid catalyst component is preferably higher than 2.5%wt more preferably higher than 3.0% with respect to the total weight of said catalyst component.

As explained above, the catalyst components of the invention comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is disclosed as a support for Ziegler-Natta catalysts. Patents USP 4,298,718 and USP 4,495,338 were the first to describe the use of these compounds in Ziegler-Natta catalysis. It is disclosed in these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present disclosure are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å may range from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of chemical reactions such as transterification.

Regardless of the preparation method used, the final amount of the electron donor compound of formula (I) is such that its molar ratio with respect to the Ti atoms is from 0.01 to 2, preferably from 0.05 to 1.5.

The solid catalyst components according to the present disclosure are converted into catalysts for the polymerization of olefins by reacting them with organoaluminum compounds according to available methods.

In particular, it is an object of the present disclosure a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

External electron-donor compounds according to the present disclosure include silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the present disclosure;
(ii) an alkylaluminum compound and,
(iii) optionally an electron-donor compound (external donor).

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization may be carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure may range between 1 and 8 MPa, preferably between 1.5 and 5 MPa.

The following examples are given in order to further illustrate the subject matter of the present disclosure.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg).

### EXAMPLES

### General procedure for preparation of the spherical adducts

An initial amount of microspheroidal MgCl₂·2.8C₂H₅OH was prepared according to the method described in Example 2 of WO98/44009, but operating on larger scale.

### General procedure for the preparation of the solid catalyst component

Into a 500 mL round bottom flask, equipped with mechanical stirrer, cooler and thermometer 250 mL of TiCl₄ were introduced at room temperature under nitrogen atmosphere. After cooling to 0°C, while stirring, the internal donor and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, an amount of dicyclopentyldimethoxysilane such as to have a Al/Si molar ratio of 20, and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Donor synthesis

### Synthesis of donor of example 1

In a 250 mL round bottom flask, under nitrogen at room temperature, are introduced ethyl 2-hydroxy-3,5-diisopropylbenzoate (10 g, 40 mmol), CH₂Cl₂ (60 mL), pyridine (3.5 mL, 44 mmol) then ethyl chloroformate (4.2 mL, 44 mmol) is added dropwise under stirring and cooling. The mixture is stirred at room temperature until GC show the starting is completely converted into product. The mixture is carefully quenched with acidic water and the organic layer is separated and washed with water until neutral pH, then is anhydrified over Na₂SO₄ and the solvent is distilled off to afford pure ethyl 2-((ethoxycarbonyl)oxy)-3,5-diisopropylbenzoate.

### Synthesis of donor of Example 2

The procedure is the same as that used in the synthetic example 1 except that ethyl 3-hydroxy-2-propylheptanoate is used instead of ethyl 2-hydroxy-3,5-diisopropylbenzoate.

### Synthesis of donor of Example 3

The procedure is the same as that used in the synthetic example 1 except that ethyl 2-(2-hydroxyphenyl)-4-methylpentanoate is used instead of ethyl 2-hydroxy-3,5-diisopropylbenzoate.

### Synthesis of donor of Example 4

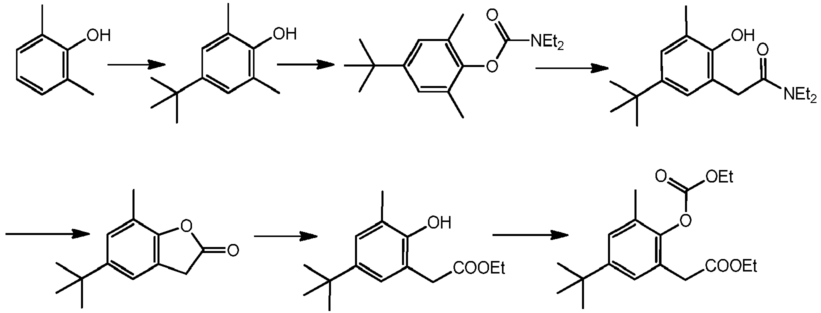

First step: In a 500 mL round bottom flask, under nitrogen at room temperature, are introduced 2,6-xylenol (54.5 g, 0.45 mol), heptane (130 mL), tert-butanol (66 g, 0.9 mol), then concentrated H2SO4

(28.4 mL, 0.54 mol) is added dropwise under stirring. After one hour the reaction is completed and the mixture is diluted with water and diethyl ether. The organic layer is separated and washed with water until neutral pH, then is anhydrified over Na2SO4 and the solvent is distilled off to afford 81.3 g of 4-tert-butyl-2,6-xylenol with a GC purity of 98%wt (yield 98%) which is used in the next step without further purification.

Second step: In a 2 litre round bottom flask, under nitrogen are introduced 4-tert-butyl-2,6-xylenol (132.4 g, 0.74 mol), THF (750 mL) and sodium ethoxide (62.9 g, 0.9 mol). After 30 minute of post-reaction time diethylcarbamoyl chloride (122 mL, 0.97 mol) is added slowly dropwise. The reaction is monitored via GC and extra sodium ethoxide and diethylcarbamoyl chloride are added to convert completely the starting. Then the mixture is diluted with water and i-hexanes, the organic layer is separated and washed with water until neutral pH, then is anhydrified over Na2SO4 and the solvent is distilled off to afford 197.8 g of 4-(tert-butyl)-2,6-dimethylphenyl diethylcarbamate with a GC purity of 98%wt (yield 94%) which solidified upon standing. The product is used in the next step without further purification.

Third step: In a 2 litre round bottom flask, under nitrogen are introduced THF (770 mL), 4-(tert-butyl)-2,6-dimethylphenyl diethylcarbamate (173.5 g, 0.63 mol) and diisopropylamine (8.8 mL, 0.063 mol) then the mixture is cooled to 0°C and n-BuLi is added dropwise (solution 2.5 mol/L in hexanes, 520 mL, 1.3 mol). Then the cooling bath is removed and the reaction is let to warm to room temperature. After 30 minutes at this temperature the reaction is diluted with water and ethyl acetate. The organic layer is separated and washed with water until neutral pH, then is anhydrified over Na2SO4 and the solvent is distilled off to afford 177.4 g of 2-(5-(tert-butyl)-2-hydroxy-3-methylphenyl)-N,N-diethylacetamide with a purity GC of 94% (yield 96%) which is used in the next step without further purification.

Fourth step: In a round bottom flask are introduced 2-(5-(tert-butyl)-2-hydroxy-3-methylphenyl)-N,N-diethylacetamide (purity 94% from the previous step, 170 g, 0.57 mol), ethanol (200 mL) and concentrated H2SO4 (30.4 mL, 0.57 mol). The mixture is brought to reflux and kept ad this temperature for 5 hours then is diluted with water and ethyl acetate. The organic layer is separated and washed with water until neutral pH, then is dried over Na2SO4 and the solvent is distilled off to afford a dark oil which is purified via heptane crystallization to afford 86.1 g of 5-(tert-butyl)-7-methylbenzofuran-2(3H)-one with a GC purity of 98%wt (yield 72%).

Fifth step: 5-(tert-butyl)-7-methylbenzofuran-2(3H)-one (83.4 g, 0.4 mol) from the previous step is treated with ethanol (200 mL) and a catalytic amount of concentrated H2SO4 at reflux for 30 minutes then the mixture is worked-up as to afford ethyl 2-(5-(tert-butyl)-2-hydroxy-3-methylphenyl) acetate.

Sixth step: The procedure is the same as that used in the synthetic example 1 except that ethyl 2-(5-(tert-butyl)-2-hydroxy-3-methylphenyl)acetate is used instead of ethyl 2-hydroxy-3,5-diisopropylbenzoate.

### Synthetic of donor of example 5

The procedure is the same as that used in the synthetic example 4 except that in the sixth step butyl chloroformate is used instead of ethyl chloroformate.

### Examples 1-5

The catalyst components were prepared according to the general procedure using the donors indicated in Table 1. The so obtained solid catalyst components were analyzed for their composition, and were tested in polymerization of propylene, using the procedure described above. The results are listed in Table 1.

**Table 1**

| | **Catalyst compostion** | | **Polymerization** | | | |
|---|---|---|---|---|---|---|
| | **Internal Donor** | | **Ti** | **Mileage** | **XI** | **MIL** |
| | **Name** | **%wt** | **%wt** | **kg/g** | **%wt** | **/10'** |
| 1 | 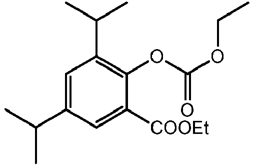 | 12.0 | 4.3 | 44 | 96.5 | 6.9 |
| 2 | 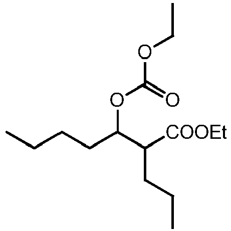 | 9.2 | 3.9 | 39.4 | 96.3 | 5.5 |
| 3 | 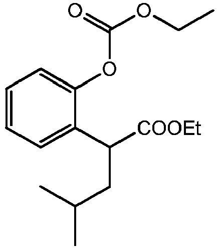 | n.d. | 3.6 | 28.6 | 97.5 | 5.5 |
| 4 | 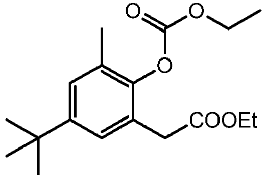 | 16.9 | 3.0 | 30.0 | 98.3 | 5.1 |
| 5 | 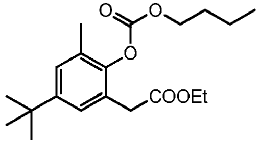 | 16.2 | 3.1 | 30.5 | 98.1 | 2.9 |

| | | | | | | |
|---|---|---|---|---|---|---|
| n.d.: not determined | | | | | | |

## Claims

1. A solid catalyst component for the polymerization of olefins comprising Mg, Ti, halogen and an electron donor of formula (I) or (II) 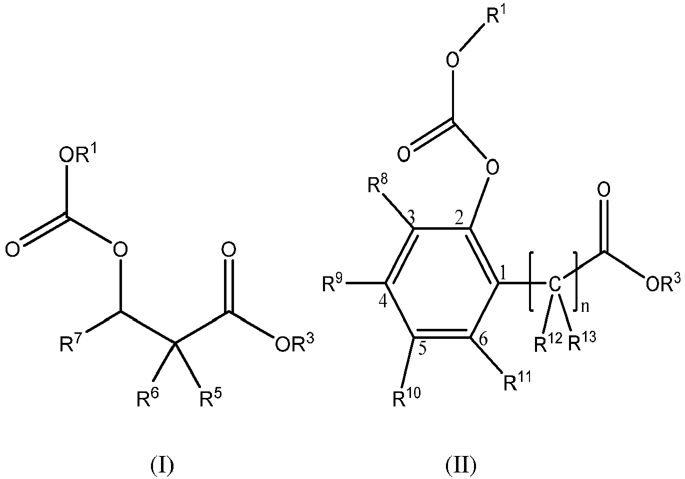 where:
- R¹ and R³ are selected from C₁-C₁₅ hydrocarbon groups, optionally containing a heteroatom selected from halogen, P, S, N and O;
- R⁵-R⁷ groups are independently hydrogen or a C₁-C₂₀ hydrocarbon radicals, optionally substituted with heteroatoms selected from halogen, P, S, N, O and Si, which can be fused together to form one or more cycles;
- R⁸ to R¹¹, independently, are selected from hydrogen, halogens or C₁-C₁₅ hydrocarbon groups optionally substituted with heteroatoms selected from halogen, P, S, N, O and Si;
- R¹² to R¹³ groups, equal to or different from each other, are hydrogen or R¹ groups which can be fused together to form one or more cycles and
n is an integer from 0 to 2.

2. The catalyst component according to claim 1 in which in the electron donor of formula (I) least one of the R⁵-R⁷ groups is a C₁-C₂₀ hydrocarbon radicals.

3. The catalyst component according to claim 2 in which at least one of R⁵-R⁷ groups is a C₁-C₁₀ alkyl group.

4. The catalyst component according to claim 3 in which both R⁵ and R⁷ are C₁-C₁₀ alkyl groups.

5. The catalyst component according to claim 1 in which at least one of the R⁸ to R¹¹ groups is different from hydrogen.

6. The catalyst component according to claim 5 in which the aromatic ring is substituted in position 3 and/or 5 with a C₁-C₅ alkyl group.

7. The catalyst component according to claim 6 in which the alkyl group in position 5 is secondary or tertiary alkyl group.

8. The catalyst component according to claim 1 in which n is 1.

9. The catalyst component according to claim 8 in which both R¹² and R¹³ are hydrogen.

10. The catalyst component according to anyone of claims 1-9 in which R¹ and R³ groups are independently selected from C₁-C₁₅ alkyl groups, C₆-C₁₄ aryl groups, C₃-C₁₅ cycloalkyl groups, and C₇-C₁₅ arylalkyl or alkylaryl groups.

11. The catalyst component according to claim 10 in which R¹ and R³ groups are independently selected from C₁-C₅ alkyl groups.

12. The catalyst component according to claim 11 in which R¹ and R³ groups are ethyl.

13. A catalyst for the polymerization of olefins comprising the product of the reaction between:
(i) the solid catalyst component according to any of the preceding claims and
(ii) an alkylaluminum compound and optionally,
(iii) an external electron donor compound.

14. The catalyst according to claim 13 further comprising an external electron donor compound.

15. A process for the (co)polymerization of olefins CH₂=CHR, in which R is hydrogen or a hydrocarbyl radical with 1-12 carbon atoms, carried out in the presence of a catalyst system comprising the product of the reaction between:
i. the solid catalyst component according to any of the claims 1-12;
ii. an alkylaluminum compound and,
iii. optionally an external donor compound.

## Patentansprüche

1. Feste Katalysatorkomponente für die Polymerisation von Olefinen, umfassend Mg, Ti. Halogen und einen Elektronendonor mit der Formel (I) oder (II) 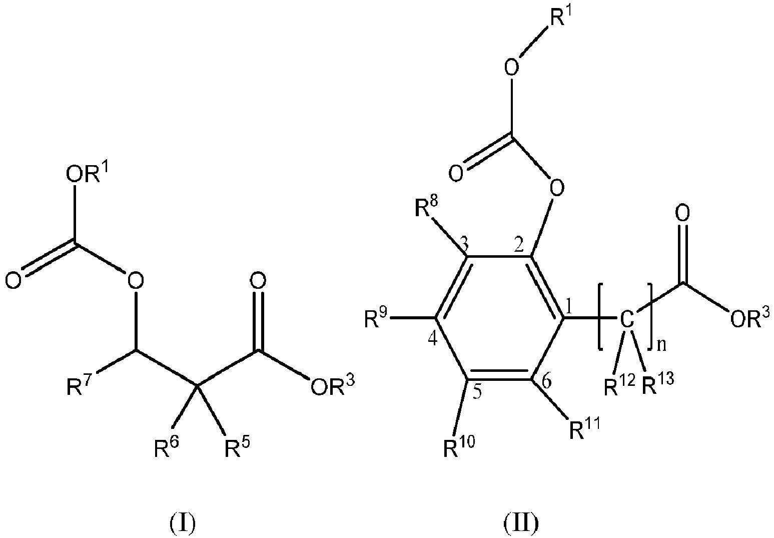 wobei:
- R¹ und R³ ausgewählt sind aus C₁- bis C₁₅-Kohlenwasserstoffgruppen, die gegebenenfalls ein Heteroatomen ausgewählt aus Halogen, P, S, N und O enthalten;
- die Gruppen R⁵ bis R⁷ unabhängig Wasserstoff oder C₁- bis C₂₀-Kohlenwasserstoffreste sind, die gegebenenfalls mit Heteroatomen ausgewählt aus Halogen, P, S, N, O und Si substituiert sind, die unter Bildung von einem oder mehreren Cyclen miteinander kondensiert sein können;
- R⁸ bis R¹¹ unabhängig ausgewählt sind aus Wasserstoff, Halogenen oder C₁- bis C₁₅-Kohlenwasserstoffgruppen, die gegebenenfalls mit Heteroatomen ausgewählt aus Halogen, P, S, N, O und Si substituiert sind;
- die Gruppen R¹² bis R¹³, die gleich oder voneinander verschieden sind, Wasserstoff oder Gruppen R¹ sind, die unter Bildung von einem oder mehreren Cyclen miteinander kondensiert sein können, und
n eine ganze Zahl von 0 bis 2 ist.

2. Katalysatorkomponente nach Anspruch 1, wobei in dem Elektronendonor der Formel (I) mindestens eine der Gruppen R⁵ bis R⁷ ein C₁- bis C₂₀-Kohlenwasserstoffrest ist.

3. Katalysatorkomponente nach Anspruch 2, wobei mindestens eine der Gruppen R⁵ bis R⁷ eine C₁- bis C₁₀-Alkylgruppe ist.

4. Katalysatorkomponente nach Anspruch 3, wobei sowohl R⁵ als auch R⁷ C₁- bis C₁₀-Alkylgruppen sind.

5. Katalysatorkomponente nach Anspruch 1, wobei sich mindestens eine der Gruppen R⁸ bis R¹¹ von Wasserstoff unterscheidet.

6. Katalysatorkomponente nach Anspruch 5, wobei der aromatische Ring in Position 3 und/oder 5 mit einer C₁- bis C₅-Alkylgruppe substituiert ist.

7. Katalysatorkomponente nach Anspruch 6, wobei die Alkylgruppe in Position 5 eine sekundäre oder tertiäre Alkylgruppe ist.

8. Katalysatorkomponente nach Anspruch 1, wobei n 1 ist.

9. Katalysatorkomponente nach Anspruch 8, wobei sowohl R¹² als auch R¹³ Wasserstoff sind.

10. Katalysatorkomponente nach einem der Ansprüche 1 bis 9, wobei die Gruppen R¹ und R³ unabhängig ausgewählt sind aus C₁- bis C₁₅-Alkylgruppen, C₆- bis C₁₄-Arylgruppen, C₃-bis C₁₅-Cycloalkylgruppen und C₇- bis C₁₅-Arylalkyl- oder -Alkylarylgruppen.

11. Katalysatorkomponente nach Anspruch 10, wobei die Gruppen R¹ und R³ unabhängig ausgewählt sind aus C₁- bis C₅-Alkylgruppen.

12. Katalysatorkomponente nach Anspruch 11, wobei die Gruppen R¹ und R³ Ethyl sind.

13. Katalysator zur Polymerisation von Olefinen, umfassend das Produkt der Reaktion zwischen:
(i) der festen Katalysatorkomponente gemäß einem der vorhergehenden Ansprüche und
(ii) einer Alkylaluminiumverbindung und gegebenenfalls
(iii) einer externen Elektronendonorverbindung.

14. Katalysator nach Anspruch 13, ferner umfassend eine externe Elektronendonorverbindung.

15. Verfahren zur (Co)polymerisation von Olefinen CH₂=CHR, wobei R Wasserstoff oder ein Kohlenwasserstoffrest mit 1 bis 12 Kohlenstoffatomen ist, welches in Gegenwart eines Katalysatorsystems durchgeführt wird, welches das Produkt der Reaktion zwischen
i. der festen Katalysatorkomponente nach einem der Ansprüche 1 bis 12;
ii. einer Alkylaluminiumverbindung und
iii. gegebenenfalls einer externen Donorverbindung umfasst.

## Revendications

1. Composant de catalyseur solide pour la polymérisation d'oléfines comprenant Mg, Ti, halogène et un donneur d'électrons de formule (I) ou (II) 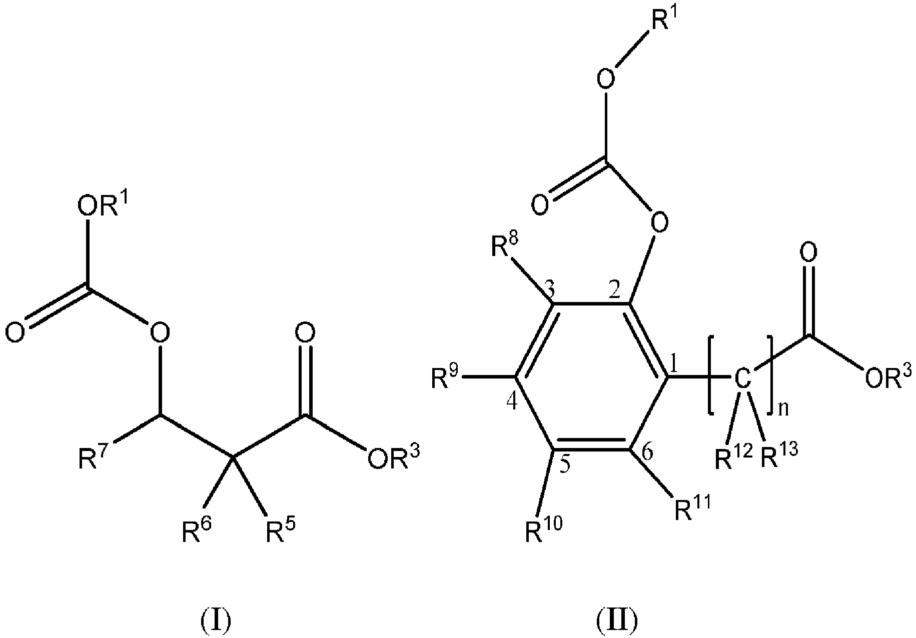 dans laquelle :
- R¹ et R³ sont choisis parmi des groupes hydrocarbonés en C₁-C₁₅ contenant optionnellement un hétéroatome choisi parmi halogène, P, S, N et O ;
- les groupes R⁵-R⁷ sont indépendamment hydrogène ou un radical hydrocarboné en C₁-C₂₀, optionnellement substitué par des hétéroatomes choisis parmi halogène, P, S, N, O et Si, qui peuvent être fusionnés ensemble pour former un ou plusieurs cycles ;
- R⁸ à R¹¹, sont indépendamment choisis parmi hydrogène, des halogènes ou des groupes hydrocarbonés en C₁-C₁₅ optionnellement substitués par des hétéroatomes choisis parmi halogène P, S, N, O et Si ;
- les groupes de R¹² à R¹³ identiques ou différents les uns des autres, sont hydrogène ou des groupes R¹ qui peuvent être fusionnés ensemble pour former un ou plusieurs cycles,
n est un nombre entier allant de 0 à 2.

2. Composant de catalyseur selon la revendication 1 dans lequel, dans le donneur d'électrons de formule (I), au moins l'un des groupes R⁵ à R⁷ est un radical hydrocarboné en C₁-C₂₀.

3. Composant de catalyseur selon la revendication 2 dans lequel au moins l'un des groupes R⁵ à R⁷ est un groupe alkyle en C₁-C₁₀.

4. Composant de catalyseur selon la revendication 3 dans lequel R⁵ ainsi que R⁷ sont des groupes alkyle en C₁-C₁₀.

5. Composant de catalyseur selon la revendication 1 dans lequel au moins l'un des groupes R⁸ à R¹¹ est différent de l'hydrogène.

6. Composant de catalyseur selon la revendication 5 dans lequel le cycle aromatique est substitué en position 3 et/ou 5 avec un groupe alkyle en C₁-C₅.

7. Composant de catalyseur selon la revendication 6 dans lequel le groupe alkyle en position 5 est un groupe alkyle secondaire ou tertiaire.

8. Composant de catalyseur selon la revendication 1, dans lequel n est égal à 1.

9. Composant de catalyseur selon la revendication 8 dans lequel R¹² ainsi que R¹³ sont l'hydrogène.

10. Composant de catalyseur selon l'une quelconque des revendications 1-9 dans lequel les groupes R¹ et R³ sont indépendamment choisis parmi des groupes alkyle en C₁-C₁₅, des groupes aryle en C₆-C₁₄, des groupes cycloalkyle en C₃-C₁₅, et des groupes arylalkyle ou alkylaryle en C₇-C₁₅.

11. Composant de catalyseur selon la revendication 10 dans lequel les groupes R¹ et R³ sont indépendamment choisis parmi les groupes alkyle en C₁-C₅.

12. Composant de catalyseur selon la revendication 11 dans lequel les groupes R¹ et R³ sont éthyle.

13. Catalyseur pour la polymérisation d'oléfines comprenant le produit de la réaction entre :
(i) le composant de catalyseur solide selon l'une quelconque des revendications précédentes et
(ii) un composé de l'alkylaluminium et optionnellement,
(iii) un composé donneur d'électrons externe.

14. Catalyseur selon la revendication 13 comprenant, en outre, un composé donneur d'électrons externe.

15. Procédé pour la (co)polymérisation d'oléfines CH₂=CHR, dans lesquelles R est hydrogène ou un radical hydrocarbyle ayant de 1 à 12 atomes de carbone, réalisée en présence d'un système catalyseur comprenant le produit de la réaction entre :
i. le composant de catalyseur solide selon l'une quelconque des revendications 1 à 12 ;
ii. un composé de l'alkylaluminium et,
iii. optionnellement, un composé donneur externe.
